# EUROPÄISCHE PATENTSCHRIFT

(11) **EP 0 994 494 B1**
(45) Veröffentlichungstag und Bekanntmachung des Hinweises auf die Patenterteilung: **15.12.2004**
(21) Anmeldenummer: 99120311.8
(22) Anmeldetag: 12.10.1999
(51) Int. Cl.: H01G 9/008, H01G 4/228

(54) **Kondensator für niederinduktive Zwischenkreisaufbauten**
Capacitor for low-inductance mounting on an intermediate cricuit
Condensateur à basse inductance pour montage sur circuits intermédiaires

(30) Priorität: 13.10.1998 DE 19847028
(43) Veröffentlichungstag der Anmeldung: 19.04.2000
(73) Patentinhaber: Semikron Elektronik GmbH, D-90253 Nürnberg (DE)
(72) Erfinder: Schimanek, Ernst, 90489 Nürnberg (DE)

(56) Entgegenhaltungen:
- DE-A- 4 110 339
- DE-C- 19 725 844
- US-A- 4 547 832

## Beschreibung

Die Erfindung beschreibt einen Kondensatoraufbau für hohe Anforderungen nach den Merkmalen des Oberbegriffes des Anspruches 1 und gibt Varianten für deren Einsatz insbesondere in Umrichtern und Anordnungen an, wie erfinderische Kondensatoren niederinduktiv in Zwischenkreisen integriert werden können.

Nach dem Stand der Technik sind Kondensatoren hinlänglich bekannt. Technisch haben sich zwei Arten des Kondensatoraufbaus durchgesetzt: Folien- und Elektrolytkondensatoren. Der Einsatz des einen oder anderen Kondensatortyps richtet sich nach den Anforderungen in den entsprechenden Schaltungsanordnungen. Elektrolytkondensatoren sind in ihrer maximalen Spannungsbelastbarkeit begrenzt, man kennt heute typische obere Spannungsgrenzen von 450 bis 550 Volt, mit solchen Aufbauten werden die höchsten Kapazitätswerte erzielt. Folienkondensatoren hingegen haben eine geringere Speicherkapazität für die elektrische Ladung, dafür sind jedoch vorteilhaft wesentlich höhere Spannungsfestigkeiten zu erreichen.

Kondensatoren werden in der Leistungselektronik vorwiegend in Spannungszwischenkreisen von Umrichtern oder als Filterkondensatoren eingesetzt, in beiden Fällen ist sowohl ein möglichst niederinduktiver Aufbau der Kondensatoren als auch eine niederinduktive Anschlußtechnik jedes Kondensators im Zwischenkreis erforderlich.

Bei Folienwickelkondensatoren wird überwiegend nach dem Stand der Technik ein flacher Rundwickel hergestellt, der auf den beiden Stirnseiten über aufgelötete Bleche kontaktiert ist. Für den Anschluß wird das untere Blech außerhalb des Wickelbereichs annähernd in die Ebene des oberen Bleches geführt, damit ergeben sich die Anschlußpunkte neben dem Kondensator.

In anderen Konstruktionen erfolgt der Anschluß auf der Kondensatoroberseite, wiederum wird das untere Blech über den Kondensatorumfang nach oben gebogen, der Anschlußpunkt muß dann gegen seine Auflagefläche isoliert werden. In gleicher Weise verursacht hier die Anschlußkonfiguration den Hauptanteil der parasitären Serieninduktivität. Es sind jedoch für den Einsatz im Filterbereich Ausführungen bekannt, die den einen Anschluß auf der Oberseite des Kondensators und den anderen Anschluß aufder Unterseite des Kondensators aufweisen.

Im Zuge der Verdichtung der Leistungen in modernen Schaltungsanordnungen gewinnen die Probleme der parasitären Induktivitäten wachsend insbesondere in Umrichtern mit hoher Schaltfrequenz an Bedeutung. So sind Versuche publiziert, alle gleichstromführenden Teile mit ihren beiden Anschlüssen untereinander so nahe wie irgend möglich zu positionieren.

Umrichter mit hoher Leistungsdichte sind mehrfach aus der Literatur bekannt und werden beispielhaft zitiert, um einen Einblick in die zu lösende eigene erfinderische Aufgabe zu geben. Die US 4,547,832 A offenbart einen Folienkondensator bekannter Bauweise, mit einer zentral gelegenen Hülse. Die untere Anschlussfläche wird mit einem äußeren Anschluss derart kontaktiert, dass die Kontaktierung in ihrem Verlauf in der zentral gelegenen Hülse angeordnet ist.

In DE 41 10 339 C2 werden die Gleichstromanschlüsse der Kondensatoren eng benachbart angeordnet und eine flächige Ausbildung des Zwischenkreises wird offengelegt. Die Anordnung der diskret aufgebauten Kondensatoren zum Zwischenkreis und den Schaltungsteilen des Umrichters wird in Figuren dargestellt und textlich beschrieben.

DE 42 32 763 C2 schlägt zur Realisierung eines Wechselrichters den Einsatz von Mehrlagenverbindungsschienen vor und beschreibt dabei deren induktivitätsarme Positionierung. Ausgangspunkt ist bei dieser Lösung der Einsatz diskret aufgebauter Kondensatoren.

Eine relativ darauf bezogene noch besser definierte Lage der äußeren Anschlüsse von diskreten Kondensatoren wird in DE 195 19 538 A1 beschrieben. Zur Realisierung einer möglichst induktivitätsarm aufgebauten Umrichter- Anordnung werden hier weiterhin mehrere Vorschläge zur Verschaltung der Gleichstrom führenden Schaltungsteile unterbreitet.

Spezielle Ausbildungen von Kondensatoren, insbesondere mit Hohlräumen, die für die induktivitätsarme Einbindung der übrigen Umrichter- Aufbauten geeignet oder zu verwenden sind, werden in DE 42 30 510 C1 und auch in DE 44 43 498 C vorgeschlagen.

Zwischenkreisverschienungen von Umrichtern werden nach dem Stand der dargestellten Technik in Form von Sandwich- Verschienungen (oder auch Mehrlagenleiter genannt) ausgeführt, um die auftretende Induktivität klein zu halten. Bei jedem Schraubanschluß muß aber zwangsweise aus Isolationsgründen ein nicht unerheblicher Abstand zwischen den Anschlußpunkten eingehalten werden, der wiederum zu parasitären Induktivitäten führt.

In EP 0 476 297 A1 wird ein Elektrolytkondensator mit verringerter Induktivität vorgestellt, der in seinem Aufbau die bewährten Kondensatorwickel beibehält, jedoch die austretenden Anschlußbändchen werden hier mittels einer einfach zu realisierenden Klappfaltung induktivitätsarm aus dem Wickel herausgeführt.

Auch jüngere Vorveröffentlichungen, wie beispielhaft in DE 195 10 624 C1, verwenden für ihren Aufbau die bekannte und bewährte Anschlußfolge.

Die vorliegende Erfindung hat die Aufgabe, einen niederinduktiv aufgebauten Folienkondensator vorzustellen, der in einen Zwischenkreisaufbau von Umrichtern integriert werden kann und dazu geeignet ist, eine kompakte und zuverlässige Aufbauweise zu ermöglichen.

Diese Aufgabe wird durch die Maßnahmen des kennzeichnenden Teiles des Anspruchs 1 gelöst, vorteilhafte Ausführungsvarianten sind in den nachgeordneten Ansprüchen gekennzeichnet.

Der erfinderische Gedanke soll nachfolgend auf der Grundlage von skizzierten nicht maßstabsgerechten Darstellungen näher erläutert werden.
**Fig. 1** zeigt den Stand der Technik von Kondensatoraufbauten in zwei Varianten.
**Fig. 2** skizziert den erfinderischen Aufbau eines Kondensators in einem Zwischenkreissegment.
**Fig. 3** zeigt zwei Aufbauvarianten der erfinderischen Lösung auf.
**Fig. 4** stellt eine Anwendungsvariante einer erfinderischen Lösung dar.

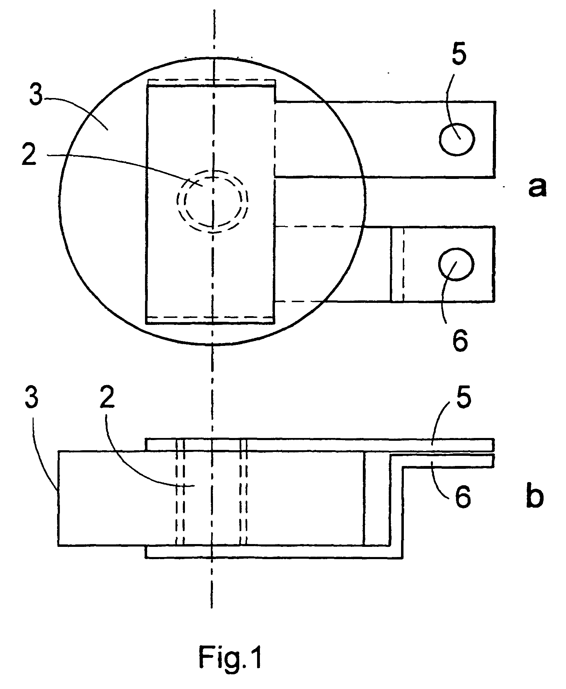

**In Fig. 1a** ist die Form des Rundwickels (3) eines Folienkondensators dargestellt. Die Kreise um den Mittelpunkt deuten auf die Hülse (2) als Zone ohne technologische Nutzung durch Wickel hin. In dieser Darstellung ist das Herausführen der beiden Gleichstromanschlüsse für die äußere Stromkontaktierung erkennbar.

Der obere Anschluß (3) hat eine flächige Ausdehnung in der Form eines Rechteckes mit der Anschlußlasche (5). Der untere Anschluß besitzt ein analoges Aussehen und liegt unterhalb der Darstellungsebene, sichtbar gezeichnet ist die dazugehörende Anschlußlasche (6). Die Laschen (5 und 6) sind voneinander beabstandet, um Überschläge zu vermeiden, dieser Aufbau verursacht große Induktivitätswerte in Hochleistungsanordnungen.

**Fig. 1b** zeigt einen Querschnitt des in Fig. 1a skizzierten Kondensators. Die nicht dargestellten einzelnen Kondensatorwicklungen sind wiederum als Wickel (3) dargestellt. Die wicklungsfreie Hülse (2) im Zentrum des Wickels (3) ist auch hier gestrichelt gezeichnet. Der obere Anschluß stellt die Anschlußkontaktierung an die Schoppierung der Wicklung dar und endet in der oberen Lasche (5).

Die zweite Elektrode wird als unterer Anschluß in Opposition zu dem oberen positioniert, sie mündet in der Lasche (6), die hier isoliert an der äußeren Ummantelung auf die obere Ebene geführt wird. Dadurch ist zumindest eine weitere Montage in einer Ebene gewährleistet. Die parasitäre Induktivität ist auch durch diesen Aufbau beachtlich und nicht minimiert.

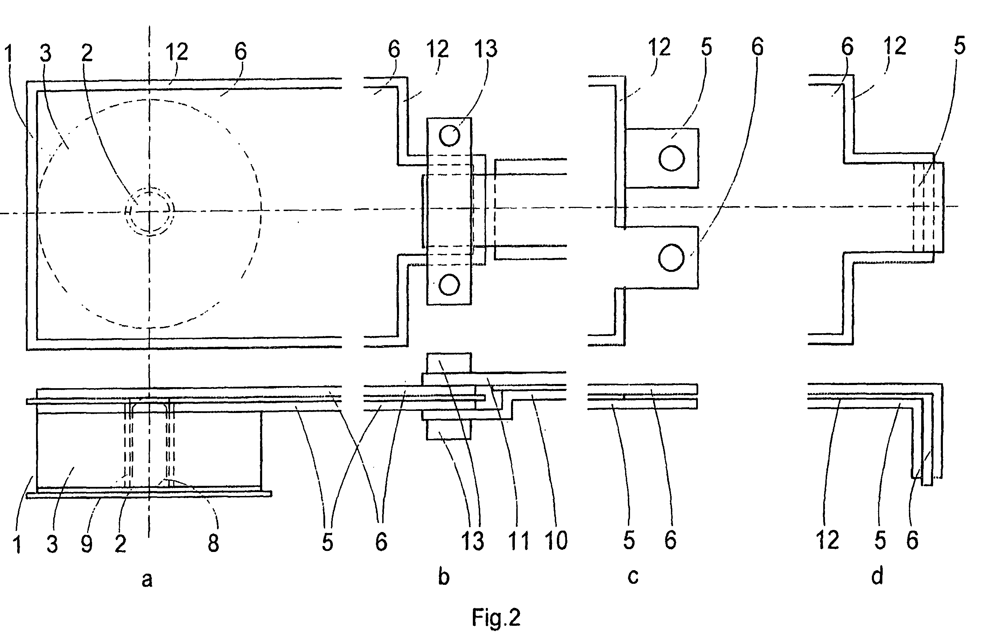

**Fig. 2** skizziert den erfinderischen Aufbau eines Kondensators in einem Zwischenkreissegment. **In Fig. 2a** ist im oberen Teil eine Draufsicht aufeinen Wickel (3) mit seinem runden Tubus (1) gestrichelt dargestellt. Die Hülse (2) ist durch zwei gestrichelte Kreise dargestellt, sie ist wiederum von Wickeln frei. Die oben liegende Anschlußlasche (6) für den unteren Anschluß ist sichtbar, sie ist flächig ausgebildet und überdeckt den gesamten Tubus (1), wodurch sie gleichzeitig eine Stromschiene eines Zwischenkreises darstellen kann. Mit gering größeren Außenabmessungen ist an den Rändern der Anschlußlasche (6) eine Isolationsschicht (12) dargestellt.

Im unteren Teil der Fig. 2a ist der Querschnitt der oben dargestellten Skizze gezeichnet. Die zentrale Hülse (2) ist elektrisch gegen die Wickel isoliert (9) und wird mittels leitendem Zylinder (8) zur elektrischen Kontaktierung des unteren als Platte ausgebildeten Anschlusses genutzt. Dieser so gebildete koaxiale Anschluß des Kondensators verbindet elektrisch die über die gesamte Ausdehnung des Tubus (1) großflächig kontaktierte Unterseite des Kondensators mit der entsprechenden Anschlußlasche (6) auf der Oberseite des Kondensators.

Der Zylinder (8), der in der isolierten Hülse (2) plaziert ist, wird vorteilhaft als federndes Element ausgebildet und kann so eine elektrische Kontaktierung nach oben darstellen, wodurch eine zuverlässige Druckkontaktierung der unteren Anschlußplatte mit der hier oben liegenden Anschlußlasche (6) möglich ist. Durch die Isolierung (9) der Hülse und der Isolierung (12) zwischen den beiden eng benachbart positioniert angeordneten Anschlußlaschen (5, 6) werden die beiden Pole des Kondensators elektrisch voneinander getrennt.

Das einseitige Kontaktieren von Kondensatoren beinhaltet den Vorteil eines paßgenauen Aufsetzens auf Kühlflächen. Durch Unterlegen von flächenhaft ausgebildeten Unterlagen ist es möglich, einen guten Wärmeübergang auf Kühleinrichtungen zu realisieren.

Die weitere elektrische Verknüpfung zur Zwischenkreisverschienung hängt von dem sich anzuschließenden Aufbau der Schaltungsanordnung ab und ist für mehrere mögliche Systeme beispielhaft in den Fig. 2b bis Fig. 2d dargestellt.

**In Fig. 2b** ist eine isolierende Druckkontaktlasche (13) zur induktivitätsarmen Verbindung der Kondensatoranschlußlaschen (5, 6) mit äußeren Sekundäranschlüssen, wie sie beispielhaft als Zwischenkreiselektroden (10, 11) in Draufsicht und im Querschnitt dargestellt sind. Für eine induktivitätsarme Verbindung von Kondensator und Zwischenkreis können auch andere Lösungen nach dem Stand der Technik gewählt werden, wie sie beispielhaft in DE 195 19 538 A1 in der dortigen Fig. 1. skizziert sind

**Fig. 2c** stellt dar, daß es analog dem Stand der Technik möglich ist, die beiden Anschlußlaschen (5, 6) aus großflächigen Anschlußplatten zu formen, um die in der Praxis noch geläufige Anschlußfolge zu ermöglichen, jedoch sind hier die zu erwartenden Induktivitäten größer, als bei einem Anschluß nach Fig. 2b.

**Fig. 2d** zeigt schließlich die Möglichkeit der Realisierung abgewinkelter Anschlüsse von den Laschen (5, 6) direkt zu den Zwischenkreiselektroden (10, 11) mit der Isolationsschicht (12). Durch die Gestaltung der eng benachbarten Lage der beiden Kondensatoranschlüsse ist eine niederinduktive Anschlußfolge in der Anwendung möglich.

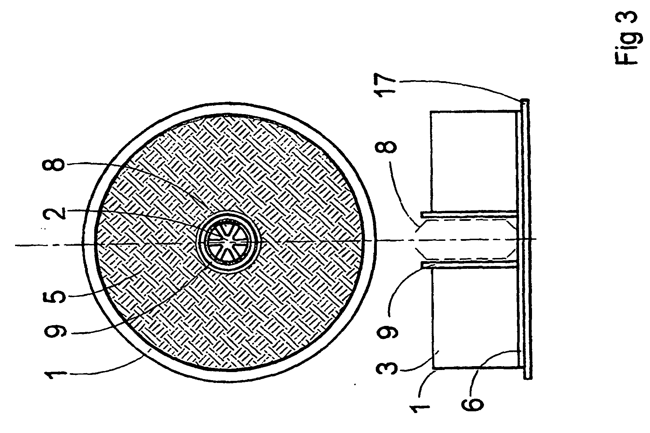

**Fig. 3** zeigt zwei Aufbauvarianten der erfinderischen Lösung auf. **In Fig. 3** ist im oberen Teil die Draufsicht auf einen Folienkondensator gezeichnet. Die Wickel sind in einfacher Weise ohne Umhüllung (1) ausgeführt, die Schopierung für die obere Anschlußlasche (5) ist sichtbar. Die Hülse (2) beinhaltet den Isolator (9) und den elektrisch leitfähigen Zylinder in der Form einer für einen Druckkontakt geeigneten Feder (8). Mittels der Feder (8) wird eine elektrische Verbindung des unteren Anschlusses (6) zur Kondensator- Oberfläche realisiert. Dieser Kondensator ist auf eine Grundplatte (17), die aus elektrisch isolierendem jedoch die Wärme gut leitendem Material besteht, aufgebaut.

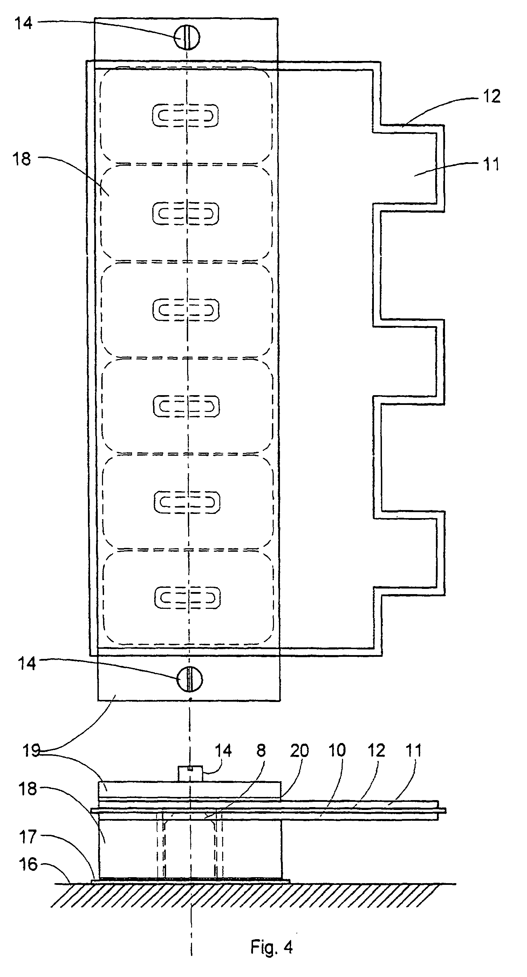

**Fig. 4** stellt eine Anwendungsvariante einer erfinderischen Lösung dar. Prinzipiell kann der Aufbau nach Fig. 2 und 3 mit Kondensatoren (18), die aus flachgepreßten Wickeln geformt sind, erfolgen. Ein Parallelschalten von sechs solcher Kondensatoren (18) ist im oberen Bild schematisch dargestellt. Das teilweise gezeichnete Zwischenkreissegment in Form der oberen Anschlußelektrode (11) und der Isolatorschicht (12) ist skizziert. Ein Brückenelement (19) mit druckgebender Verschraubung (14) ist in seiner Geometrie angedeutet.

In der unteren Skizze ist ein Querschnitt der oben dargestellten Konfiguration gezeichnet. Sowohl die elektrische Kontaktierung als auch der thermische Kontakt zu einem Kühlkörper(16) wird über einen Druckspeicher eines Druckfedernsystems (20) nach dessen Druckbeaufschlagung mittels Verschraubung (14) hergestellt.

Durch eine angepaßte Konstruktion wird über ein zwei- oder mehrfach eingespanntes Brückenelement (19) eine gleichmäßig verteilte Kraft auf den Zwischenkreis (10, 11, 12) und damit auf alle integrierten Kondensatoren (18) aufgebracht. Durch die Verschraubung (14) werden über das Brückenelement (19) gleichzeitig alle unteren Kondensatoranschlüsse über die elektrisch leitenden Federn (8) druckkontaktiert.

Als Kraftspeicher für das Drucksystem kann die elastische Isolation (12) dienen, es kann jedoch auch ein zusätzliches Druckfedernsystem (20) eingefügt werden. Zum Toleranzausgleich ist der Kontakt des elektrisch leitenden Zylinders (8) in der Hülse (2) des Kondensators (18) federnd ausgeführt. Dieses mit dem übrigen Schaltungsaufbau integrierte System kann beim Lösen der Verschraubung (14) zerstörungsfrei demontiert werden.

Durch den Einsatz eines isolierenden aber gleichzeitig gut wärmeleitenden Materials (17) zwischen Kondensator (18) und Kühlkörper (16) kann ein geringer thermischer Widerstand erzielt werden. Durch eine so erreichbare intensive Kühlung der Zwischenkreiskondensatoren kann die Wechselstrombelastung gegenüber einem ungekühlten System massiv erhöht und damit eine extrem kompakte Aufbaudichte realisiert werden.

## Patentansprüche

1. Folienkondensator bestehend aus einem Wickel (3) aus folienhaften Bahnen dielektrischen und leitenden Materials mit einer oberen Anschlußfläche (5) mit einem äußeren Anschluß, einer unteren Anschlußfläche (6), mit einem äußeren Anschluß, einer äußeren Begrenzung (1) und einem zentrisch gelegenen Bereich ohne Wickel in der Form einer sich von der oberen Seite bis zur unteren Seite des Kondensatoraufbaus erstreckenden zylindrischen Hülse (2) mit eng benachbart und voneinander isoliert ausgeführten äußeren elektrischen Anschlüssen und die Hülse (2) zur gegen die Wickel (3) isolierten zentral gelegenen Kontaktierung (8) der unteren Anschlußfläche mit äußeren Anschlüssen (6, 11), die oberhalb der oberen Anschlußfläche (5) liegen, genutzt wird,
**dadurch gekennzeichnet, daß**
die Kontaktierung (8) die Form eines Druckkontakts besitzt und aus einem federnden Material hergestellt ist.

2. Kondensator nach Anspruch 1, **dadurch gekennzeichnet, daß**
die äußeren Anschlüsse (5, 6, 10, 11) eine flächige Form besitzen und als Zwischenkreis des Gleichstromteiles eines Umrichters dienen.

3. Kondensator nach Anspruch 1, **dadurch gekennzeichnet, daß**
die äußeren Anschlüsse (5, 10) der einen Polarität und die äußeren Anschlüsse (6, 11) der anderen Polarität eng benachbart durch eine Isolationsschicht (12) elektrisch voneinander getrennt positioniert sind.

4. Kondensator nach Anspruch 1, **dadurch gekennzeichnet, daß**
der Zentralanschluß (8) mit dem Wickel 3 eine koaxiale Anordnung bildet.

## Claims

1. A film capacitor consisting of a winding (3) made of film-type webs of dielectric and conductive material with an upper terminal area (5) with an external terminal and a lower terminal area (6) with an external terminal, an outer limitation (1) and a centrally positioned area with no windings in the form of a cylindrical sleeve (2) extending from the upper side to the lower side of the capacitor assembly with closely adjacent external electrical terminals, which are insulated from each other, and the sleeve (2) is used for centrally positioned contacting (8) insulated from the windings (3) of the lower terminal area with external terminals (6, 11), which are located above the upper terminal area (5),
**characterised in that**
the contact (8) has the form of a pressure contact and is produced from a resilient material.

2. Capacitor according to claim 1, **characterised in that**
the external terminals (5, 6, 10, 11) have a flat shape and serve as the intermediate circuit for the DC portion of a converter.

3. Capacitor according to claim 1, **characterised in that**
the external terminals (5, 10) of one polarity and the external terminals (6, 11) of another polarity are positioned in close proximity and electrically separated from each other by an insulating layer (12).

4. Capacitor according to claim 1, **characterised in that**
the central terminal (8) forms a coaxial arrangement with the winding 3.

## Revendications

1. Condensateur à film constitué d'un bobinage (3) à voies de type film de matériaux diélectriques et conducteurs, avec une pastille supérieure (5) dotée d'un raccord extérieur, et une pastille inférieure (6) dotée d'un raccord extérieur, une limitation extérieure (1) et une zone centrale sans bobinage, sous la forme d'une douille (2) cylindrique s'étendant du côté supérieur au côté inférieur du montage du condensateur, avec des raccords électriques extérieurs très proches et isolés les uns des autres, et la douille (2) étant utilisée pour la mise en contact (8) centrale, isolée par rapport au bobinage (3), de la pastille inférieure avec les raccords extérieurs (6, 11), situés au-dessus de la pastille supérieure (5), **caractérisé en ce que** la mise en contact (8) a la forme d'un contact par pression et est fabriquée dans un matériau élastique.

2. Condensateur selon la revendication 1, **caractérisé en ce que** les raccords extérieurs (5, 6, 10, 11) ont une forme plane et servent de circuit intermédiaire de la partie à courant continu d'un convertisseur.

3. Condensateur selon la revendication 1, **caractérisé en ce que** les raccords extérieurs (5, 10) de l'une des polarités et les raccords extérieurs (6, 11) de l'autre polarité très proches sont séparés électriquement les uns des autres par une couche isolante (12).

4. Condensateur selon la revendication 1, **caractérisé en ce que** le raccord central (8) forme un dispositif coaxial avec le bobinage (3).
